# EUROPEAN PATENT APPLICATION

(11) **EP 2 169 449 A1**
(43) Date of publication of application: **31.03.2010**
(21) Application number: 08765749.0
(22) Date of filing: 19.06.2008
(51) Int. Cl.: G02F 1/13, G02F 1/1333

(54) **METHOD AND APPARATUS FOR MANUFACTURING LIQUID CRYSTAL COMPONENT**

(30) Priority: 27.06.2007 JP 2007169454
(71) Applicant: Toray Engineering Co., Ltd., Tokyo 103-0021 (JP)
(72) Inventor: NARABA, Satoru, Otsu-shi Shiga 520-2141 (JP); HIRATA, Hajime, Otsu-shi Shiga 520-2141 (JP); TAHARA, Takanori, Otsu-shi Shiga 520-2141 (JP); ARAI, Yoshiyuki, Otsu-shi Shiga 520-2141 (JP); NOGAMI, Yoshio, Otsu-shi Shiga 520-2141 (JP)
(74) Representative: Hager, Thomas Johannes
(86) International application number: PCT/JP2008/061194
(87) International publication number: WO 2009/001740

(57) **Abstract**

Provided is a liquid crystal component manufacturing method wherein a gap between a panel surface of a liquid crystal module and a transparent cover is filled with a transparent resin, then, the liquid crystal module and the transparent cover are bonded by curing the resin. In the method, at the peripheral section of at least one surface of the panel surface and the facing surface of the transparent cover, the resin is applied, then, a dam is formed by semi-curing the resin. At the same time, the resin is applied to the center, the panel surface and the transparent cover are permitted to face, and the resin applied at the center is pushed to spread by reducing the gap between the facing panel surface and the transparent cover. The resin pushed to spread is dammed up by the dam, and the whole resin that exists in the gap is cured. An apparatus for manufacturing the liquid crystal component is also provided. An optical resin layer recently developed and made known to the public is formed between the liquid crystal module panel surface and the transparent cover in desirable mode.

## Description

### Technical Field of the Invention

The present invention relates to a method and an apparatus for manufacturing a liquid crystal component, and specifically relates to a method and an apparatus for manufacturing a liquid crystal component, in which when a gap between a panel surface of a liquid crystal module and a transparent cover is filled with a predetermined resin to bond both of them, the bonding can be performed to make a good condition which is targeted.

### Background Art of the Invention

A display of a liquid crystal module used in cellular phones or various display devices conventionally has an air gap structure in which a gap (air gap) in a range of about 0.5 - 1 mm is provided between a panel surface of the liquid crystal module and a transparent cover such as a tempered glass plate or an acrylic plate, so as not to influence the liquid crystal module even in a case that the cover is broken by an external impact.

However, in this air gap structure, because a liquid crystal panel of a liquid crystal module, an air layer forming the air gap and the transparent cover made of glass or of plastic have mutually different indexes of refraction and are layered in sequence, there may be caused a reflection of light on each interfacial surface (an interfacial surface between the liquid crystal panel and the air layer, an interfacial surface between the air layer and the transparent cover and an interfacial surface between the transparent cover surface and an external air), so that a brightness may be reduced or so that a contrast ratio may be worsened by a light scattering. For example, the display from the liquid crystal panel sometimes becomes difficult to see under the light of the sun.

For that problem, there has been recently disclosed a technology where the above-described air gap is filled with a transparent optical resin whose index of refraction is close to glass or acrylic and is cured by ultraviolet irradiation, etc. (non-patent document 1). The above-described air gap is filled with this optical resin, so that the interfacial surface between the above-described liquid crystal panel and the air layer and the interfacial surface between the air layer and the transparent cover are substantively eliminated, the reflection or the light scattering on these interfacial surface is eliminated, and the brightness of the display from the liquid crystal panel and the contrast ratio can be greatly improved.
Non-patent document 1: Nikkei Electronics 2007.5.7

### Disclosure of the Invention

### Problems to be solved by the Invention

Further, in the above-described improved technology, it is required that the optical resin is formed with no air entrainment, especially with no unnecessary protrusion from the panel part of the liquid crystal module and with no influence on the surrounding members, so that a method and an apparatus for the application and hardening of the optical resin has been required to develop urgently.

Accordingly, an object of the present invention is to provide a method and an apparatus for manufacturing a liquid crystal component, which can form the optical resin layer in a surely desirable shape between the panel surface of the liquid crystal module and the transparent cover, in order to satisfy a further demand in a technology concerning the optical resin which has been recently developed and disclosed.

### Means for solving the Problems

To achieve the above-described object, a method for manufacturing a liquid crystal component according to the present invention is a method for manufacturing a liquid crystal component, wherein a transparent cover is provided with a gap relative to a panel surface of a liquid crystal module, and after filling the gap with a transparent resin, the resin is cured to bond the liquid crystal module and the transparent cover, **characterized in that** a dam is formed by semi-curing the resin after applying the resin to a peripheral section of at least one surface of the panel surface and a surface of the transparent cover facing the panel surface, the panel surface and the transparent cover are faced after applying the resin to a center section of at least one surface of the panel surface and the transparent cover surface facing the panel surface, the resin applied to the center section is pushed to spread by reducing the gap between the panel surface and the transparent cover facing each other, and a whole of the resin which exists in the gap is cured after the resin pushed to spread is dammed up by the dam.

In that method, because the semi-cured dam is formed after applying the resin to the peripheral section of at least one surface of the panel surface and the surface of the transparent cover facing the panel surface, when the resin applied to the center section is pushed to spread in the gap between the panel surface and the transparent cover, the resin which has been pushed to spread can be properly dammed by the dam so as to surely prevent an unnecessary protrusion into a position of a peripheral member. Because the liquid resin dammed by the dam is the same resin as the semi-cured resin which has formed the dam and both of them are in a condition before a complete cure, both resins can be easily assimilated into a single resin layer, without forming any interfacial surface therebetween. In addition, because of the damming by the dam a resin layer shaped in a predetermined planer shape can be easily formed by merely pushing to spread the resin. Furthermore, by pushing to spread the resin equally, the air entrainment can be easily prevented. As a result, a transparent resin layer is surely formed in a desirable shape in the above-described gap.

In the method for manufacturing a liquid crystal component according to the present invention, it is preferred that while the transparent cover surface facing to the panel surface is directed upward the resin is applied to the center section of the facing surface in a condition where the transparent cover is turned upside down, the resin applied as described above is hung down so that a more central part thereof is positioned at a lower part, and at that condition, the panel surface and the transparent cover are faced and the gap therebetween is reduced. The transparent cover with the resin which has been applied to the center section of its upper surface is turned upside down, in order that the applied resin comes to form a smooth curved shape where the more central part thereof is positioned at the lower part by the resin's own weight, and in that condition the air can be pushed out from the center section of the applied resin toward the periphery by pushing to spread the resin in reducing the gap between the panel surface and the transparent cover, so as to more surely prevent the air entrainment in achieving the pushing to spread the resin equally.

In this case it is preferable that an appropriate waiting time is given for the resin to hang down from a time when the transparent cover is turned upside down to a time when the gap is reduced. When an appropriate waiting time is given, even when it may be short, the curving surface of the hanging resin becomes smoother curving surface, so that the air entrainment can be surely prevented in achieving pushing more uniformly to spread the resin.

In addition, it is also preferable that a pressurization of the transparent cover toward the panel surface of the liquid crystal module is controlled when the above-described gap is reduced. Because the pressurization control makes it possible to control a velocity of pushing to spread the resin or an amount of pushing to spread it, a control of an arrival time to the dam of the resin to be pushed to spread becomes possible as well as a control toward a desirable shape of a combined shape of the resin which has been pushed to spread and the resin which has formed the dam. In this pressurization control a feed back control can be performed by detecting the pressure so that the pressure becomes a target pressure. In addition, if the sensor is provided in each corner part and a pressure detected by each sensor is controlled to become equal, the pressure distribution can be equalized.

In addition, it is preferable that a parallelism of the transparent cover relative to the panel surface of the liquid crystal module is adjusted when the gap is reduced. If the parallelism is adjusted in a predetermined range, the resin to be pushed to spread can extend more equally. In addition, the air becomes easy to get out to the periphery so that the air entrainment can be prevented more surely. This parallelism can be achieved by either adjusting an inclination of support means at the time of bonding or equalizing a gap (or a position such as a height of a bonding object member) detected by each sensor provided in each corner part to a predetermined value.

In addition, it is preferable that when the panel surface and the transparent cover are faced to each other, a position adjustment, namely an alignment, between them is performed. From the aspect of the process simplification it is preferable that the dam is formed at only one side of the panel surface and the transparent cover, and when both of them are aligned in a predetermined relationship, even a positional relationship between the resin applied to the center section and the dam can be determined into a desirable positional relationship, and the pushing to spread the resin and the damming by the dam can be performed in more desirable form in the present invention.

The dam can be formed by a dispenser which applies the resin on a predetermined part in sequence, or by a stamper which applies the resin at once in a predetermined form. They can be selected appropriately in consideration of the apparatus specification or demanded takt time, etc.

In the method using the stamper, when a desirable resin layer is formed in the gap between the panel surface of the liquid crystal module and the surface of the transparent cover facing the panel surface, first the resin to fill the gap is applied using the stamper on at least one surface of either the panel surface of the liquid crystal module or the surface of the transparent cover facing the panel surface. Because the stamper keeps the resin in a predetermined pattern, when the kept resin is simply transcribed the resin can be applied at once, namely in an extremely short time, in a desirable pattern, namely the pattern which is optimum for forming the resin layer, and therefore the takt time of a whole bonding process can be greatly reduced. In addition, because this optimum pattern to keep the resin is set in a predetermined pattern as the most desirable pattern by a preliminary experiment, etc., the optimum pattern to apply the resin can be surely reproduced in the everytime resin application, being extremely suitable to achieve a mass production. The resin to form the dam is applied in the optimum pattern, so that the pushing to spread the resin after its application can be performed smoothly in a desirable form.

In a method according to the present invention, the dam can be formed all over a whole circumference of the peripheral section of the above-described one surface, as to a planar shape of the dam to be formed. In this case, it is preferable to form a comparatively short dam relative to the size of the above-described gap in order that the air can be easily let out. In addition, the dam can also be formed intermittently in the peripheral section of the above-described one surface. In this case, because the space between adjacent dams formed intermittently can function as an outlet of the escaping air, the dam can be formed into a comparatively high dam having a high damming function against the resin which has been pushed to spread.

As the above-described transparent resin, an ultraviolet cure resin is preferably used because it is available actually and has been verified for its target optical function like the optical resin disclosed in non-patent document 1 as described above has been an ultraviolet cure resin, though even a thermosetting resin could be used in principle.

Further, the following embodiment can be employed in the method for manufacturing a liquid crystal component according to the present invention. In other words, after applying the resin to fill the gap to at least one surface of the panel surface of the liquid crystal module and the transparent cover surface facing the panel surface, a total weight of the applied resin and an object to be applied is scaled, a weight of the applied resin only is determined by subtracting a weight of the object to be applied from the total weight, a size of the gap to be controlled is calculated from the weight of the applied resin and a predetermined area to be filled with the resin in the gap, and based on the calculated size of the gap, a relative position of the transparent cover surface facing the panel surface to the panel surface of the liquid crystal module can be controlled.

In this method, the total weight of the applied resin and the object to be applied is scaled, and the weight of the applied resin only, is determined by subtracting the weight, which has been grasped in advance or which has been preliminarily scaled before the resin application, of the object to be applied from the total weight, and the size of the gap to be controlled is calculated based on a relation between the weight of the applied resin and the predetermined area (namely, the area which is supposed to be filled with the resin and which is so determined as to be able to prevent the reflection or the light scattering on a conventional interfacial surface as described above and to improve greatly the brightness or the contrast ratio from the display of the liquid crystal panel) to be filled with the resin in the gap. By controlling the relative position (namely, the final gap size to bond both of them) of the transparent cover surface facing the panel surface to the panel surface of the liquid crystal module into this calculated gap size (namely, by reducing the actual gap into the above-described calculated size of the gap), the interposed applied resin can be pushed to spread all over the whole desired region, causing no protrusion from the region. As a result, the control into the optimum gap can be achieved in accordance with the amount of the applied resin, and the whole region of the optimum gap can be filled with the resin without protrusion. Further, because the gap size as a control target has been calculated before the start of the pushing movement to spread the resin by reducing the gap actually, when the relative position of the transparent cover surface facing the panel surface to the panel surface of the liquid crystal module is controlled (for example, the height position of the transparent cover surface facing the panel surface relative to the panel surface of the liquid crystal module), the target position can be controlled at high speed and the takt time of the whole bonding process can be shorten.

Furthermore, the following embodiment can be employed in the method for manufacturing a liquid crystal component according to the present invention. In other words, before a whole of the resin which exists in the gap is cured, a light irradiated from a side direction toward a layer of the resin, and a presence of a bubble in the layer of the resin can be detected by an observation means, utilizing a difference in refractive index with respect to the irradiated light.

In this method, when the interposed resin between the panel surface of the liquid crystal module and the facing surface of the transparent cover, which are facing each other, is pushed to spread by reducing the gap, if the air entrainment is generated and an air bubble comes in the resin layer, the presence of the air bubble in the resin layer is detected by the observation means, utilizing a difference in refractive index with respect to the light irradiated from the side direction. Because the difference in refractive index is utilized and the interfacial surface between the air bubble and the resin can be recognized clearly, even a minimal air bubble can be detected in a high precision. As the observation means, CCD camera, etc. is preferably used because there is a fear that the number of the pixels may run short in the image processing.

The presence of the air bubble in the resin layer is detected in a high precision, so that a desirable resin layer is formed and the resin can be cured only for a bonded body reaching an acceptability criterion, on the other hand, a bonded body which has failed to reach the acceptability criterion can be easily applied to a repair treatment because the resin has not been full-cured. Therefore, an extremely high rate of the process yield can be surely achieved. In addition, because the presence of the air entrainment generation can be detected properly by simple means the bonding process can be performed effectively, which makes a contribution to the reduction of the takt time of the whole bonding process.

An apparatus for manufacturing a liquid crystal component according to the present invention is an apparatus for manufacturing a liquid crystal component, wherein a transparent cover is provided with a gap relative to a panel surface of a liquid crystal module, and after filling the gap with a transparent resin, the resin is cured to bond the liquid crystal module and the transparent cover, comprising:
means for applying the resin to a peripheral section of at least one surface of the panel surface and a surface of the transparent cover facing the panel surface, in a shape of a dam,
means for semi-curing the resin applied in the dam shape,
means for applying the resin in a center section of at least one surface of the panel surface and the transparent cover surface facing the panel surface,
means for making the panel surface and the transparent cover face each other,
means for pushing to spread the resin applied in the center section by reducing the gap between the panel surface and the transparent cover facing each other until the resin is dammed up by the dam, and
means for curing a whole of the resin which exists in the gap.

In the apparatus for manufacturing a liquid crystal component, it is preferable that the means for applying the resin in the center section of at least one surface of the panel surface and the transparent cover surface facing the panel surface comprises means for applying the resin in the center section of the facing surface while the transparent cover surface facing to the panel surface is directed upward, and the apparatus has means for turning the transparent cover upside down for making a condition where the applied resin is hung down so that a more central part thereof is positioned at a lower part.

In this case, it is preferable that a waiting time is given for the resin to hang down from a time when the transparent cover is turned upside down to a time when the gap is reduced.

In addition, it preferable to have means for controlling a pressurization of the transparent cover toward the panel surface of the liquid crystal module when the gap is reduced.

Further, it is also preferable to have means for adjusting a parallelism of the transparent cover relative to the panel surface of the liquid crystal module when the gap is reduced.

Further, it is preferable to have means for adjusting a position (means for aligning) between the panel surface and the transparent cover.

In addition, a structure which has either a dispenser or a stamper for applying the resin to form the dam can be employed.

The dam can be formed in a whole circumference of the peripheral section of the one surface, and can be formed intermittently.

Further, it is preferable that an ultraviolet cure resin is used as the transparent resin, and in that case it is preferable to have an ultraviolet irradiating means for semi-curing and curing the ultraviolet cure resin.

### Effect according to the Invention

According to the method and the apparatus for manufacturing a liquid crystal component according to the present invention, as for the technology concerning the optical resin which has been recently developed and disclosed, the optical resin layer can be formed in a surely desirable shape between the panel surface of the liquid crystal module and the transparent cover with no unnecessary protrusion. That makes it possible to correspond with a mass production utilizing this optical resin.

### Brief explanation of the drawings

[Fig. 1] Fig. 1 is a block diagram showing an example of the manufacturing method of a liquid crystal component according to an embodiment of the present invention.
[Fig. 2] Fig. 2 is a schematic perspective view of a manufacturing apparatus according to an embodiment of the present invention.
[Fig. 3] Fig. 3 is a schematic perspective view showing a step of a manufacturing method of a liquid crystal component according to the present invention using the apparatus shown in Fig. 2.
[Fig. 4] Fig. 4 is a schematic perspective view showing the next step of Fig. 3.
[Fig. 5] Fig. 5 is a schematic perspective view showing the next step of Fig. 4.
[Fig. 6] Fig. 6 is a schematic perspective view showing the next step of Fig. 5.
[Fig. 7] Fig. 7 is a schematic perspective view showing the next step of Fig. 6.
[Fig. 8] Fig. 8 is a schematic perspective view showing the next step of Fig. 7.
[Fig. 9] Fig. 9 is a schematic perspective view showing the next step of Fig. 8.
[Fig. 10] Fig. 10 is a schematic perspective view showing the next step of Fig. 9.
[Fig. 11] Fig. 11 is a partial schematic vertical sectional view showing a state of aligning of a top-and-bottom bonded member in the apparatus of Fig. 2.
[Fig. 12] Fig. 12 is a schematic perspective view showing the next step of Fig. 10.
[Fig. 13] Fig. 13 is a schematic perspective view showing the next step of Fig. 12.
[Fig. 14] Fig. 14 is a plan view of a bonded member showing an example of a dam shape.
[Fig. 15] Fig. 15 is a side view of a bonded member showing an example of an applied resin shape.
[Fig. 16] Fig. 16 is a sectional view of a bonded member showing a state of pushing to spread resin.
[Fig. 17] Fig. 17 is a block diagram showing an example of a manufacturing method of a liquid crystal component according to another embodiment of the present invention.
[Fig. 18] Fig. 18 is a block diagram showing an example of the manufacturing method of a liquid crystal component according to yet another example of the present invention.
[Fig. 19] Fig. 19 is a schematic structural view showing an example of a step for detecting a presence of an air bubble in a method of Fig. 18.

### Explanation of symbols

11: manufacturing apparatus of liquid crystal component
12, 13: XY biaxial table
14: bonding/inversion table
15: bonding/inversion pedestal
16: pin
17: post-inversion loading pedestal
18: loading pedestal for repair stock
19: bonding mechanism
20, 21: dispenser
22: observation camera
23: ultraviolet irradiation means
31: transparent cover
32, 32a, 32b: dam
33: resin applied to central section
34: head of bonding mechanism
35: substrate
36: bonded body
37: ultraviolet ray
38: interfacial surface
41: light source
42: irradiated light

### The Best mode for carrying out the Invention

Hereinafter, desirable embodiments of the present invention will be explained referring to figures.

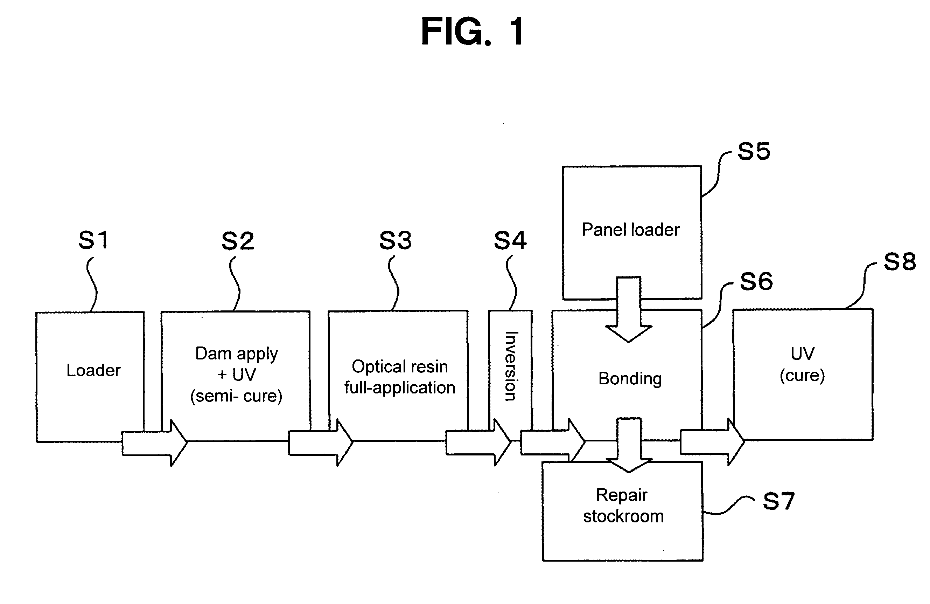

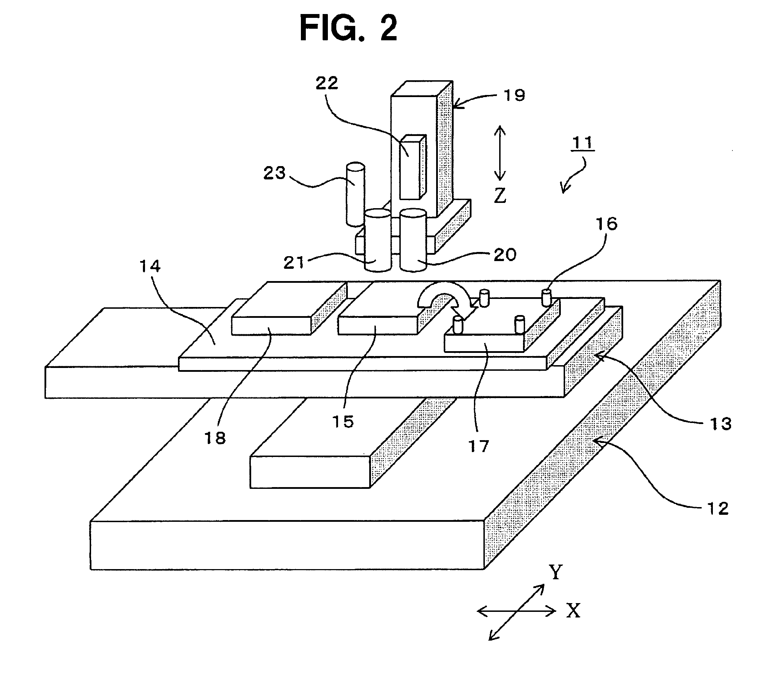

Fig. 1 shows an example of each step for a manufacturing method of a liquid crystal component according to an embodiment of the present invention, and Fig. 2 shows a schematic structure of a manufacturing method of a liquid crystal component according to an embodiment of the present invention. At first in the example shown in Fig. 1, in step S1 a transparent cover to be bonded with a liquid crystal module is carried by a loader, for example, and in step S2 an optical resin (ultraviolet cure resin) to form a transparent dam is applied on the peripheral part of the top surface of the transparent cover, and at the same time, ultraviolet ray (UV) is irradiated to the applied resin so that the resin is semi-cured to form a dam in a predetermined shape. In step S3, the optical resin is applied to the central section of the top surface of the transparent cover (main application), and a transparent cover, where a semi-cured dam is formed in a peripheral part and uncured optical resin is applied to the center section, is turned upside down in step S4 as the resin applied to the center section is hung down along a curved surface so that the more center part thereof is positioned at the lower part. At the bonding place, the liquid crystal module to be bonded in step S5 is carried in by a panel loader, on which the transparent cover which has been inverted and carried in is bonded after the position adjustment (alignment) (step S6). At that time, the resin which has been applied to the center section and has hung down is, when pushed to spread and extended to the position of the dam, dammed by the dam and merged to the resin which has formed the dam to be assimilated, so that a single uncured resin layer is formed with no inherent interfacial surface and the part surrounded by the dam in the gap between the transparent cover and the panel surface of the liquid crystal module is fully filled with the resin. Along with the pushing to spread the resin, the air which has been in the gap is removed and the air entrainment into the resin layer is prevented. In case that a defect component is produced from the poor resin extension or the air entrainment, it is transferred to a repair stocker in step S7. The defect component can be easily repaired because it is in a step before the full cure of the resin. All the resin interposing between the transparent cover and the panel surface of the liquid crystal module bonded each other is cured by the ultraviolet (UV) irradiation in step S8, and a liquid crystal component to target is completed. In addition, as to the resin cure in step S8, although a full-cure may be performed at this step, in case of aiming for a comparatively short takt time in view of a mass production, a maintenance of a fixed position relation between the transparent cover and the panel surface of the liquid crystal module which are bonded each other is sufficient (namely, so-called precure is sufficient) in step S8 , and its plurality as a whole can be full-cured more efficiently by some curing furnace provided separately.

Fig. 2 shows a structural example of the manufacturing apparatus of the liquid crystal component for carrying out the above-described method. Manufacturing apparatus of liquid crystal component 11 depicted in Fig. 2 comprises the followings:
XY biaxial table 12 whose position can be controlled in horizontal directions X,Y, for example provided with an NC (numerical control) servomechanism;
XY biaxial table 13 thereon whose position can be controlled in horizontal directions X,Y, for example provided with an air cylinder;
bonding/inversion table 14 provided on XY biaxial table 13;
bonding/inversion pedestal 15 provided on bonding/inversion table 14;
post-inversion loading pedestal 17 having pin 16, loading pedestal for repair stock 18 and;
bonding mechanism 19 whose position can be controlled in a vertical direction Z and whose pressurizing power can be controlled at the time of bonding. Bonding mechanism 19 is provided with the followings: dispenser 20,21 for applying the optical resin made of a transparent ultraviolet cure resin attached with an elevator cylinder having a large diameter and a small diameter; observation camera 22, such as CCD camera whose view angle is a predetermined value, attached with an elevator cylinder and; ultraviolet irradiation means 23 (ultraviolet light source) to irradiate ultraviolet (UV) for semi-curing or curing (for example, the above-described pre-curing) the applied resin.

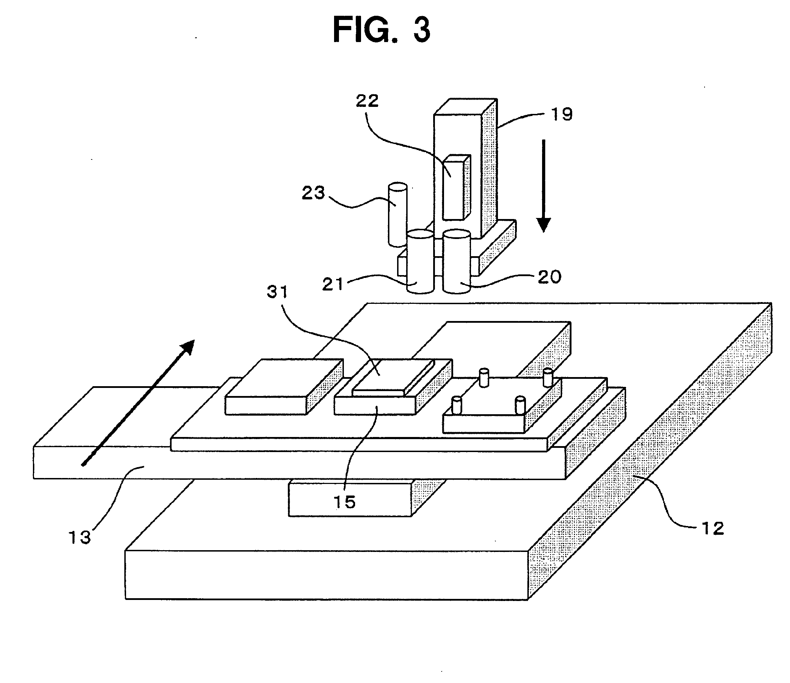

Hereinafter, the operation of thus constructed apparatus will be explained together with an example of the method according to the present invention. As depicted in Fig. 3, transparent cover 31 as a workpiece is applied on bonding/inversion pedestal 15 and the applied transparent cover 31 is moved to a predetermined position below bonding mechanism 19 through the position control by XY biaxial table 13, moving bonding mechanism 19 down so that dispenser 20,21 approaches transparent cover 31.

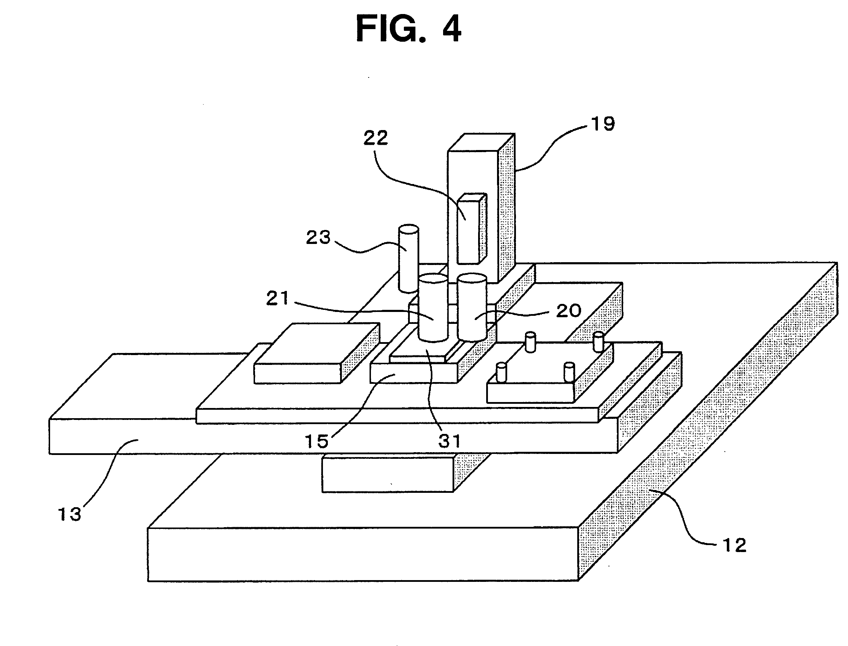

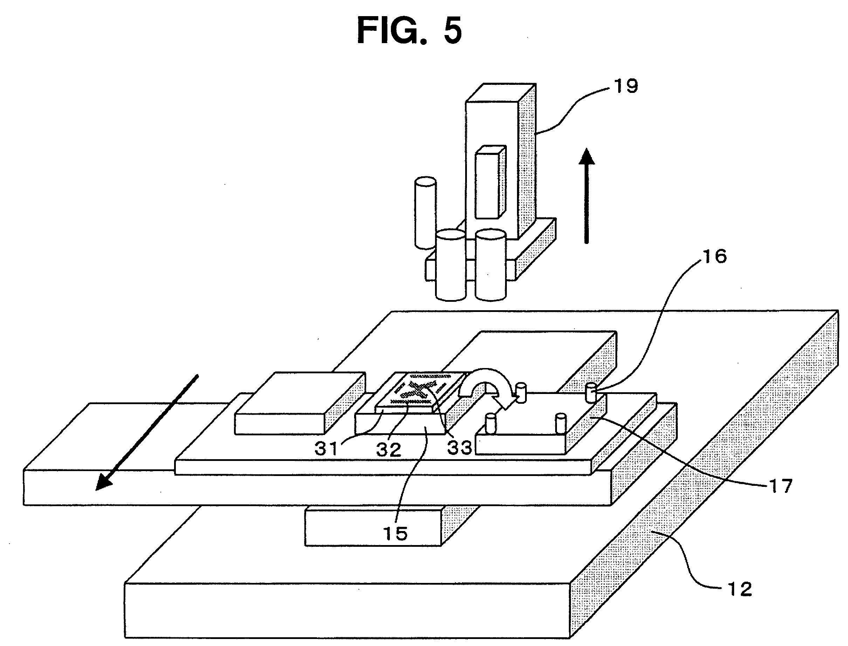

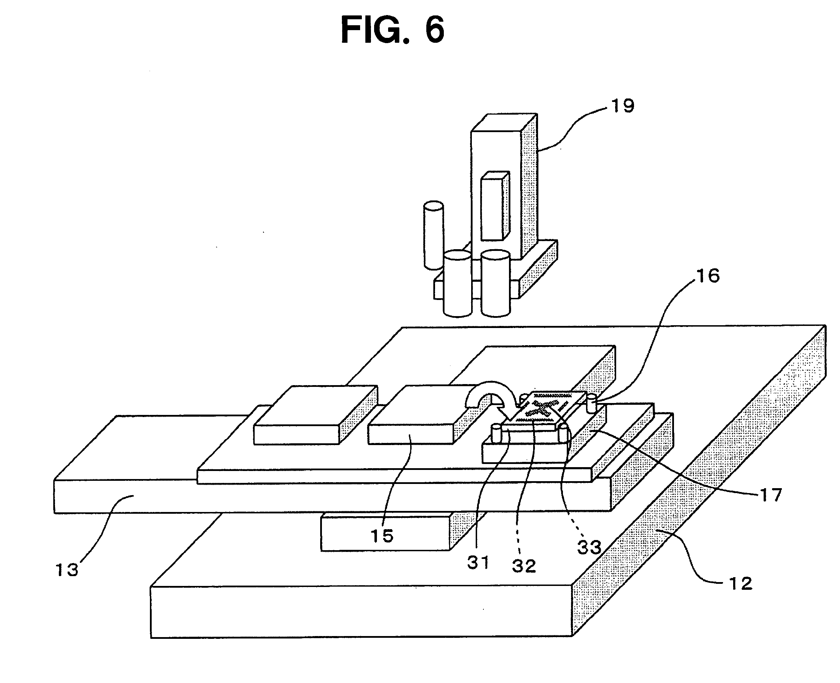

Next as depicted in Fig. 4, using large/small dispensers 20,21 as needed, the resin is applied on the peripheral part of the top surface of transparent cover 31 into the above-described dam shape and a semi-cured dam is formed by irradiating ultraviolet from ultraviolet irradiation means 23 to the applied resin, together with applying a uncured liquid resin as mounded like a mountain on the center section of the top surface of transparent cover 31. For example, the applied shape becomes as shown in Fig. 5. In Fig. 5, symbol 32 implies a dam and symbol 33 implies a resin which is applied to the center section. And as depicted in Fig. 5 and Fig. 6, the top/bottom surface is inverted to make the bottom surface the resin applied surface and transfers transparent cover 31 from bonding/inversion pedestal 15 to post-inversion loading pedestal 17, evacuating bonding mechanism 19. Transferred transparent cover 31 is received with pin 16 provided in each corner part section as preventing the applied resin from touching the top surface of post-inversion loading pedestal 17. Though in this embodiment a dispenser is used for the resin application into the dam shape, a stamper may be used to at once apply the resin into a predetermined shape, as described above.

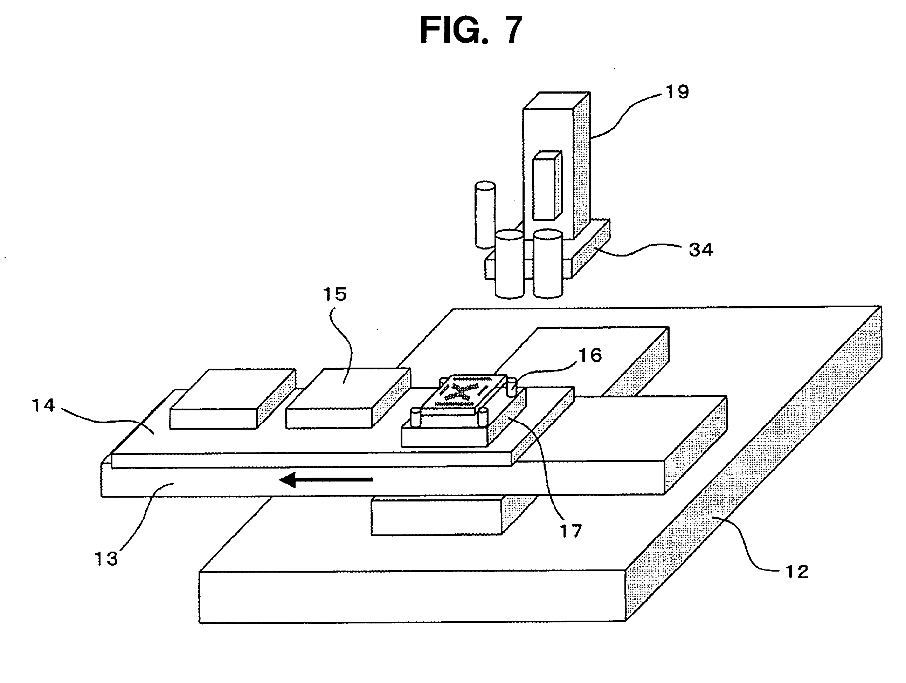

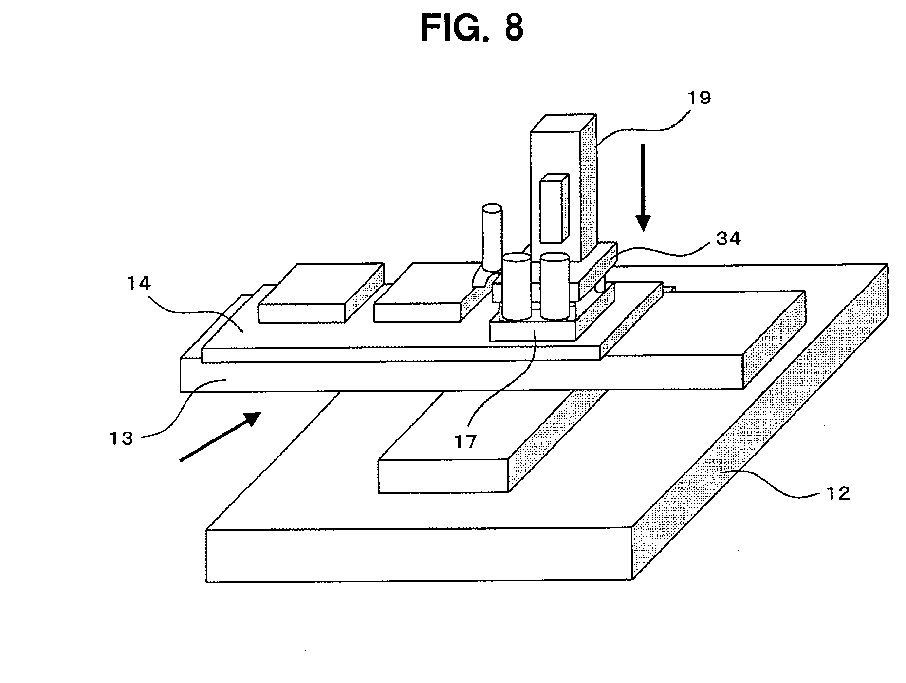

Next as depicted in Fig. 7, XY biaxial table 13 is driven to move bonding/inversion table 14 so as to move transparent cover 31 onto post-inversion loading pedestal 17. And as depicted in Fig. 8, XY biaxial table 13 is driven to move bonding/inversion table 14 thereto and after transparent cover 31 is moved below bonding mechanism 19 head 34 of bonding mechanism 19 is moved down, so that transparent cover 31 is transferred to head 34 of bonding mechanism 19. At this time head 34 holds transparent cover 31 on the anti-resin application side by adsorption, etc.

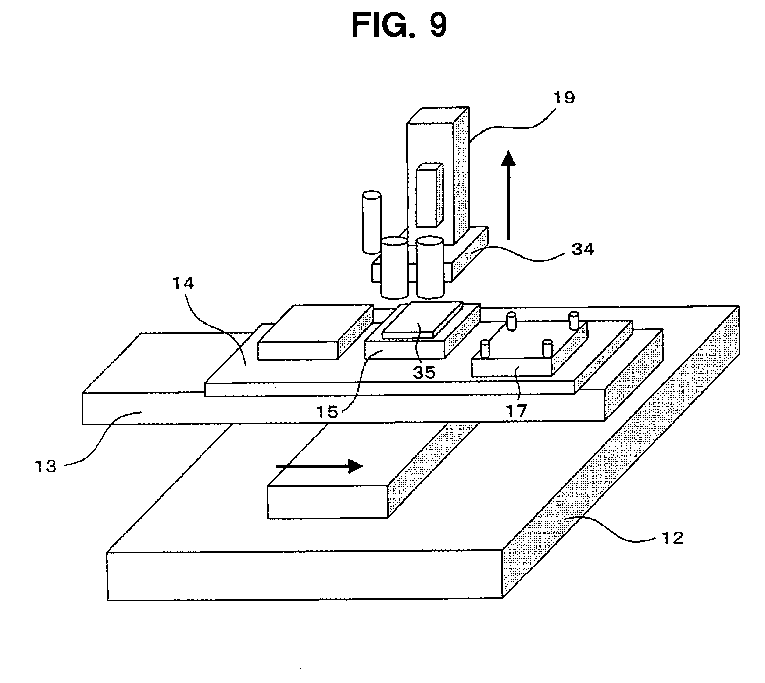

Next as depicted in Fig. 9, panel 35 which forms the surface of the liquid crystal module as a substrate or a liquid crystal module as itself which may be called simply " substrate" having panel 35 is placed on bonding/inversion pedestal 15 and XY biaxial table 13 is driven to move bonding/inversion table 14 as placed below head 34 of bonding mechanism 19 which has moved upward, namely below transparent cover 31 held by head 34.

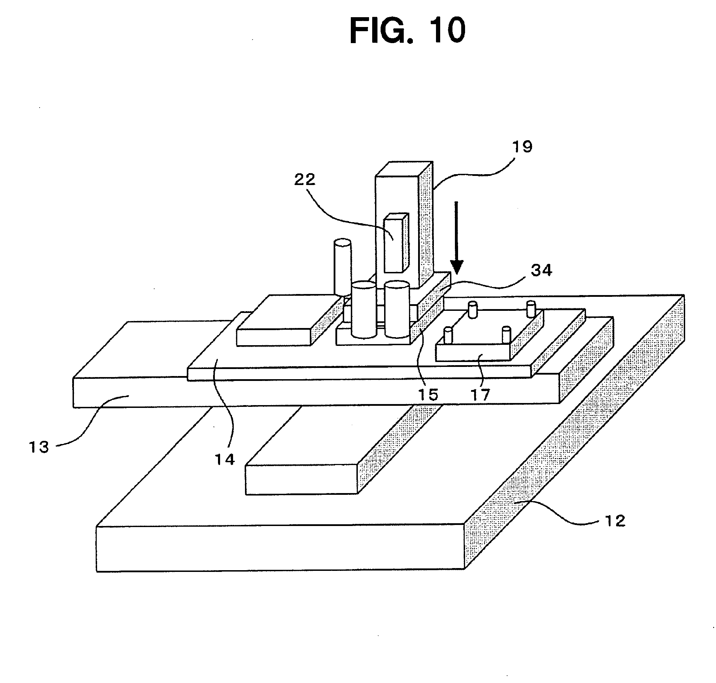

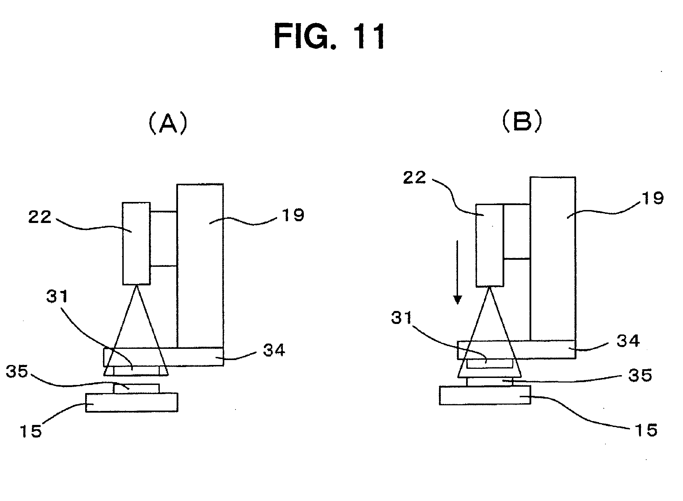

Next as depicted in Fig. 10, transparent cover 31 held by head 34 and substrate 35 placed on bonding/inversion pedestal 15 are positionally adjusted (aligned), and head 34 of bonding mechanism 19 is moved down to bond transparent cover 31 and substrate 35 via the control of predetermined pressurizing power and predetermined vertical position. At this time, in the above-described alignment the outer shape of transparent cover 31 positioned above is observed by using observation camera 22 as depicted in Fig. 11 (Fig. 11(A)), and the outer shape of substrate 35 positioned below is observed by observation camera 22 which has been moved below, controlling XY biaxial table 13 into a predetermined positional relation. Here, the parallelism between transparent cover 31 and substrate 35 can be also adjusted if XY biaxial table 13 side or head 34 of bonding mechanism 19 side has an ability to adjust the inclination.

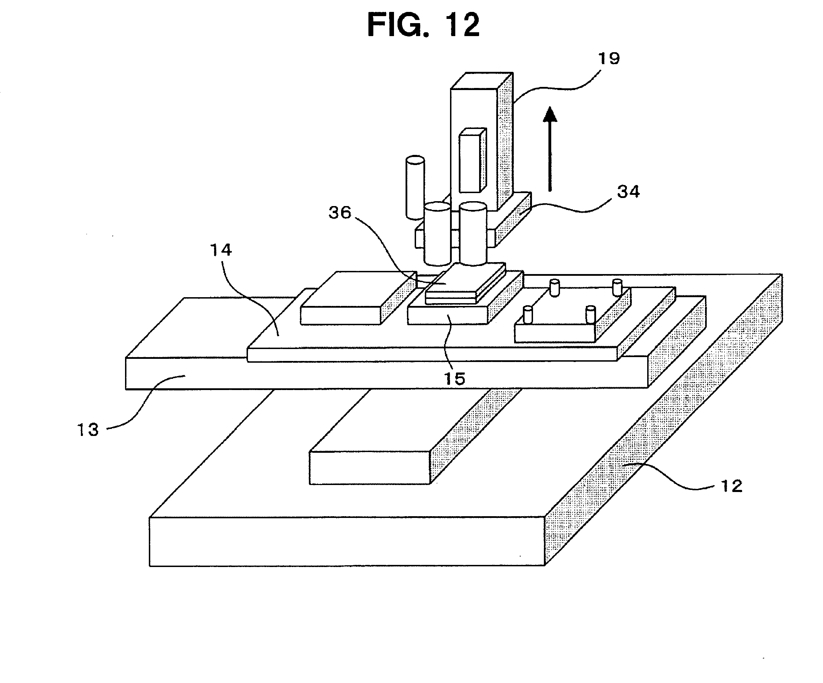

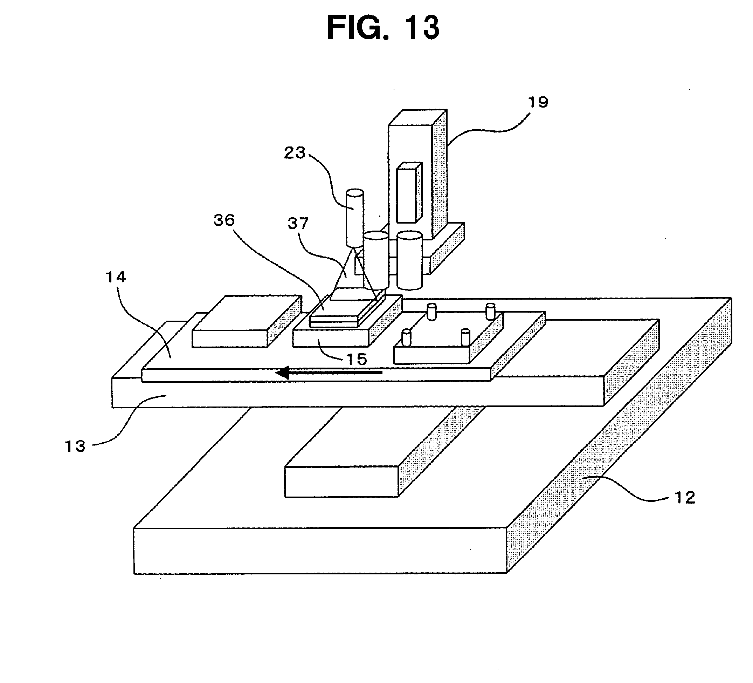

After the completion of a predetermined bonding, as depicted in Fig. 12, head 34 of bonding mechanism 19 is evacuated upward and bonded body 36 combined by the bonding is left on bonding/inversion pedestal 15. In bonded body 36, because the interposed resin between transparent cover 31 and substrate 35 is uncured, XY biaxial table 13 is driven to move bonding/inversion table 14 and bonded body 36 on bonding/inversion pedestal 15 is moved below ultraviolet irradiation means 23, as depicted in Fig. 13. Utilizing the positional control by XY biaxial table 13, the resin which has been interposed between transparent cover 31 and substrate 35 is cured by applying ultraviolet ray 37 irradiated from ultraviolet irradiation means 23 all over to bonded body 36. It will be sufficient when this cure achieves the stage of so-called pre-cure, as described above.

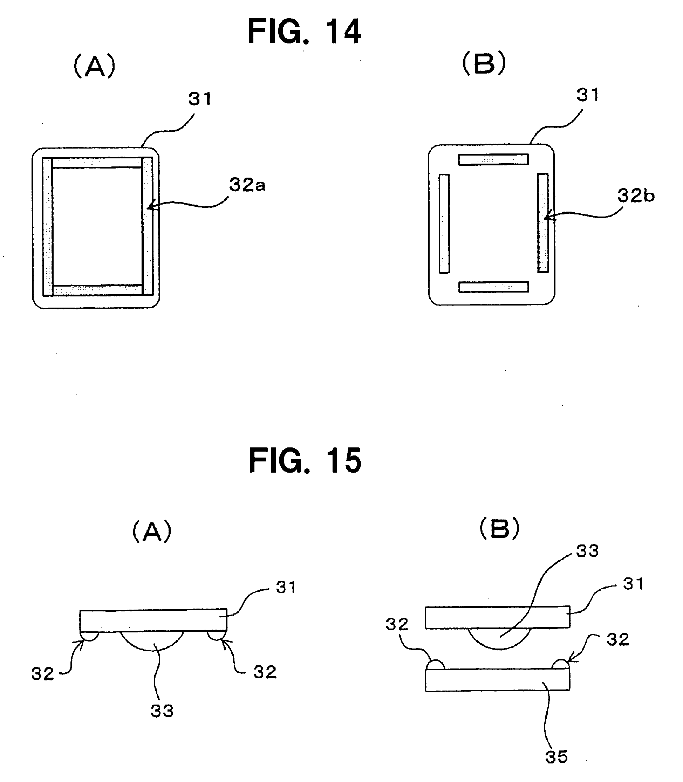

In the above-described successive steps, though a planar shape of a dam to apply to transparent cover 31 is not limited, it can be formed in a shape depicted in Fig. 14, for example. Dam 32a shown in Fig. 14 (A) is formed in a shape which extends over all the periphery part of transparent cover 31. In this case, the resin which has been pushed to spread from the center section can be dammed more surely, and if the air vent is considered in that case it is preferable that the height of dam 32a is comparatively short. On the other hand, dams 32b shown in Fig. 14 (B) are formed in a shape which extends intermittently (on and off) in a periphery part. In this case, the height of dams 32b may be comparatively high because the air can easily escape from adjacent dams 32b. In addition, the air vent space can be set intentionally at a predetermined desirable position such as a corner part as depicted in the figure by setting the position to provide the gap between adjacent dams 32b.

In addition, as depicted in Fig. 15, dam 32 and resin 33 applied to the center section can be applied to the same side, specifically the facing surface side of transparent cover 31 (Fig. 15 (A)), and alternatively, it is possible that dam 32 is formed at the side of substrate 35 while resin 33 to be applied to the center section is applied to the facing surface side of transparent cover 31. In either case, a target resin layer formative ability can be obtained, as far as the positional relation between dam 32 and resin 33 applied to the center section is set to a predetermined positional relation.

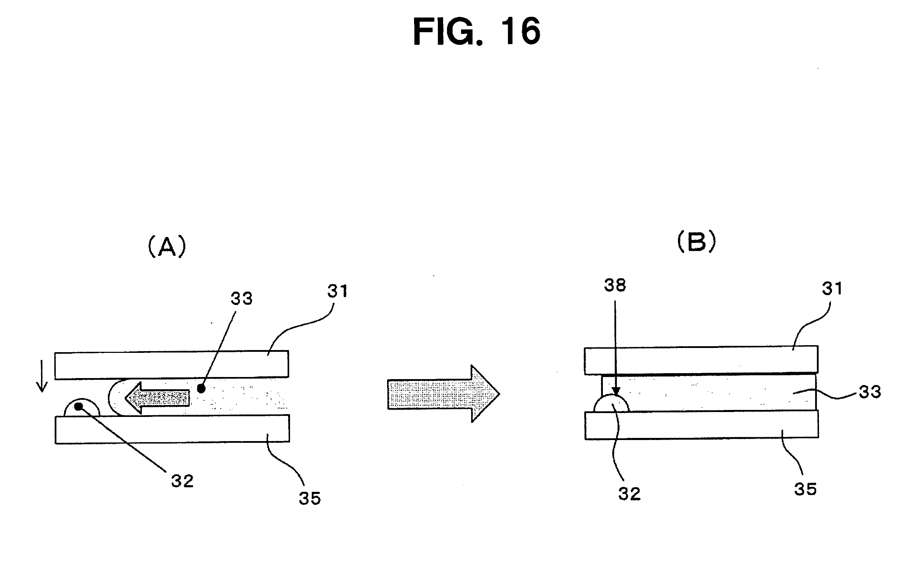

The forming of the target resin layer can be achieved as depicted in Fig. 16, where the gap between the bottom surface (facing surface) of transparent cover 31 and the top surface (panel surface in the present invention) of substrate 35, which are faced each other, is reduced (in other words, head 34 of bonding mechanism 19 is moved downward and transparent cover 31 is pressurized toward substrate 35 side in this embodiment), and resin 33 which has been applied to the center section is pushed to spread toward the side of dam 32 formed in a periphery part (Fig. 16 (A)) so that resin 33 which is pushed to spread is dammed by dam 32 in good time. At this time, though interfacial surface 38 is likely to be formed between resin 33 (liquid resin) which has been pushed to spread and the semi-cured resin which has formed dam 32, because both resins are both uncured as well as the same except for the difference between a liquid state and semi-cured state, they are naturally assimilated to form a single resin layer which has eliminated interfacial surface 38. Because the outer peripheral part of this resin layer is regulated by dam 32, the protrusion from the gap between transparent cover 31 and substrate 35 can be prevented. In addition, the air entrainment can be prevented because the air is pushed out toward the periphery part, in a process where resin 33 which has been applied to the center section of transparent cover 31 in a curved surface shape of which the closer to the central part is located at the lower level is pushed to spread toward the periphery part. As a result, a target resin layer having neither air entrainment nor protrusion can be formed.

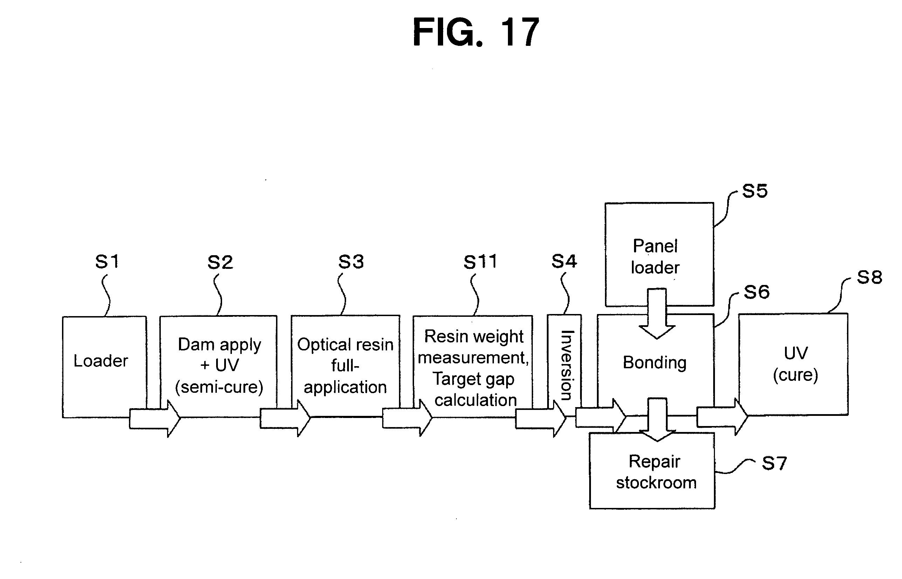

Fig. 17 shows an example of each step in a manufacturing method of a liquid crystal component according to another embodiment of the present invention, where step S11 is added in comparison with the method depicted in Fig. 1. For example, in step S3 a optical resin is applied (full cure) to the center section of the top surface of the transparent cover, and in step S11 the total weight of the transparent cover as a resin application object and a whole resin applied thereto is scaled, and the weight of the applied resin itself is determined by subtracting a preliminarily obtained weight for the transparent cover or a weight which has been scaled before the resin application from the total weight. And the size of the gap between the panel surface of the liquid crystal module to be controlled actually and the transparent cover surface facing the panel surface is calculated from the weight of the applied resin and a predetermined area which is to be filled with the resin in the gap, though the total weight measurement and the calculation of the resin weight and the target gap size may be performed after the next inversion step. And then, as explained in the above-described embodiment, the transparent cover to which the uncured optical resin is applied in its center section is turned upside down in step S4, so that the resin which has been applied to the center section is hung down in a curved surface shape where the closer to the center section is located at the lower level.

The above-described measurement of the total weight can be performed by a weight sensor provided in the apparatus such as a weight sensor provided in a holding means of the transparent cover. The calculation of the applied resin itself may be executed by a computer based on the signal from the weight sensor, and the target gap may be calculated by a computer from the obtained weight of the applied resin and the predetermined gap area.

By adding such a step S11, the gap size as a control target can be calculated before the operation that the gap is actually reduced and the resin is pushed to spread, and at the time of controlling the relative position of the transparent cover surface facing to the panel surface relative to the panel surface of the liquid crystal module, the control into the target position can be performed at a high speed so that the takt time of the whole bonding process can be shorten.

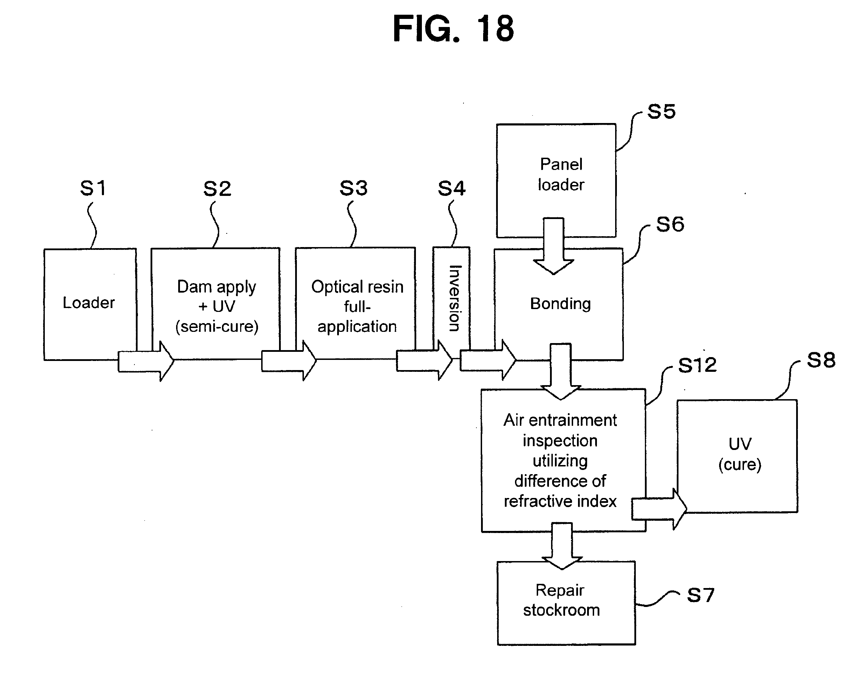

Fig. 18 shows an example of each step in a manufacturing method of a liquid crystal component according to yet another embodiment of the present invention, where step S12 is added in comparison with the method depicted in Fig. 1. The inspection of the presence of the air entrainment, namely the inspection to detect the presence of the air bubble in the resin layer is performed in step S 12 for the bonded body in which the resin layer is interposed. Though an example of an inspection method will be discussed below, the presence of the air bubble in the resin layer is detected by an observation means, basically by irradiating the light from the side to the filled resin layer and by utilizing the difference of the refraction indexes of the resin and the air bubble to the irradiated light. In case that a bonded body which contains the air bubble in the resin layer by a trouble of the resin spread or by an air entrainment is generated, it is treated as a defect product and transferred to the repair stock room in step S7. The defect component transferred to the repair stock room can be easily repaired because the resin has not been full-cured. And only bonded bodies complying with an air bubble criterion are advanced to the curing process, where the whole resin interposed between the transparent cover and the panel surface of the liquid crystal module, which are bonded each other, is cured by the ultraviolet (UV) irradiation in step S8, and a target liquid crystal component is completed.

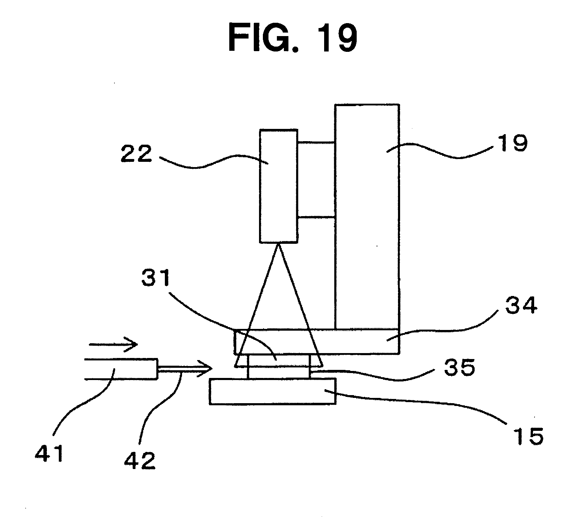

In the inspection of the air entrainment, for example, observation camera 22 such as the above-described CCD camera is used and the alignment height of camera 22 is adjusted to the resin layer between transparent cover 31 and substrate 35 by adjusting the height of bonding mechanism 19, so that the air bubble presence in the resin layer can be detected, as depicted in Fig. 19. By using observation camera 22 having sufficiently wide field of view, in other words a sufficiently wide view angle, a whole region of the resin layer can be observed at once. And in detecting the presence of the air bubble, light 42 (visible light) using light source 41 is irradiated from the side of the resin layer and the presence of the air bubble is detected by utilizing the difference between the refractive index of the air bubble and the refractive index of the resin. In other words, if the air bubble is included the refractive index greatly changes on an interfacial surface between the air bubble and the peripheral resin, so that even a minimal air bubble can be surely detected in a high precision. If the air bubble is detected and the criterion for a bonded body is not complied with, that bonded body may be transferred to be repaired, and those complying with the criterion may be advanced to the full-cure process. This makes an extremely high yield achieved. Further, as a result that the air bubble can be inspected, the takt time for a whole bonding process can be shorten.

### Industrial Applications of the Invention

The method and the apparatus for manufacturing a liquid crystal component according to the present invention is applicable for all uses to bond both of the panel surface of the liquid crystal module and the transparent cover by filling the gap therebetween with a predetermined resin, and specifically suitable for the use required to see the display under the sunlight, for example for a manufacturing of a liquid crystal module of cellular phones.

## Claims

1. A method for manufacturing a liquid crystal component, wherein a transparent cover is provided with a gap relative to a panel surface of a liquid crystal module, and after filling said gap with a transparent resin, said resin is cured to bond said liquid crystal module and said transparent cover, **characterized in that** a dam is formed by semi-curing said resin after applying said resin to a peripheral section of at least one surface of said panel surface and a surface of said transparent cover facing said panel surface, said panel surface and said transparent cover are faced after applying said resin to a center section of said at least one surface of said panel surface and said transparent cover surface facing said panel surface, said resin applied to said center section is pushed to spread by reducing said gap between said panel surface and said transparent cover facing each other, and a whole of said resin which exists in said gap is cured after said resin pushed to spread is dammed up by said dam.

2. The method for manufacturing a liquid crystal component according to claim 1, wherein while said transparent cover surface facing to said panel surface is directed upward, said resin is applied to said center section of said facing surface, in a condition where said transparent cover is turned upside down, said applied resin is hung down so that a more central part thereof is positioned at a lower part, and at that condition, said panel surface and the transparent cover are faced and said gap therebetween is reduced.

3. The method for manufacturing a liquid crystal component according to claim 2, wherein a waiting time is given for said resin to hang down from a time when said transparent cover is turned upside down to a time when said gap is reduced.

4. The method for manufacturing a liquid crystal component according to claim 1, wherein a pressurization of said transparent cover toward said panel surface of said liquid crystal module is controlled when said gap is reduced.

5. The method for manufacturing a liquid crystal component according to claim 1, wherein a parallelism of said transparent cover relative to said panel surface of said liquid crystal module is adjusted when said gap is reduced.

6. The method for manufacturing a liquid crystal component according to claim 1, wherein when said panel surface and said transparent cover are faced to each other, an alignment between them is performed.

7. The method for manufacturing a liquid crystal component according to claim 1, wherein said dam is formed by a resin application by a dispenser.

8. The method for manufacturing a liquid crystal component according to claim 1, wherein said dam is formed by a resin application by a stamper.

9. The method for manufacturing a liquid crystal component according to claim 1, wherein said dam is formed over a whole circumference of said peripheral section of said one surface.

10. The method for manufacturing a liquid crystal component according to claim 1, wherein said dam is formed intermittently in said peripheral section of said one surface.

11. The method for manufacturing a liquid crystal component according to claim 1, wherein an ultraviolet cure resin is used as said transparent resin.

12. The method for manufacturing a liquid crystal component according to claim 1, wherein after applying said resin to fill said gap to at least one surface of said panel surface of said liquid crystal module and said transparent cover surface facing said panel surface, a total weight of said applied resin and an object in which said resin is to be applied is scaled, a weight of said applied resin only is determined by subtracting a weight of said object in which said resin is to be applied from said total weight, a size of said gap to be controlled is calculated from said weight of said applied resin and a predetermined area to be filled with said resin in said gap, and based on said calculated size of said gap, a relative position of said transparent cover surface facing said panel surface to said panel surface of said liquid crystal module is controlled.

13. The method for manufacturing a liquid crystal component according to claim 1, wherein before a whole of said resin which exists in said gap is cured, a light irradiated from a side direction toward a layer of said resin, and a presence of a bubble in said layer of said resin is detected by an observation means, utilizing a difference in refractive index with respect to said irradiated light.

14. The method for manufacturing a liquid crystal component according to claim 13, wherein said resin is cured only for a bonded body reaching an acceptability criterion determined by said bubble presence detection due to said observation means.

15. An apparatus for manufacturing a liquid crystal component, wherein a transparent cover is provided with a gap relative to a panel surface of a liquid crystal module, and after filling said gap with a transparent resin, said resin is cured to bond said liquid crystal module and said transparent cover, comprising:
means for applying said resin to a peripheral section of at least one surface of said panel surface and a surface of said transparent cover facing said panel surface, in a shape of a dam,
means for semi-curing said resin applied in said dam shape,
means for applying said resin in a center section of said at least one surface of said panel surface and said transparent cover surface facing said panel surface,
means for making said panel surface and said transparent cover face each other,
means for pushing to spread said resin applied in said center section by reducing said gap between said panel surface and said transparent cover facing each other until said resin is dammed up by said dam, and
means for curing a whole of said resin which exists in said gap.

16. The apparatus for manufacturing a liquid crystal component according to claim 15, wherein said means for applying said resin in said center section of said at least one surface of said panel surface and said transparent cover surface facing said panel surface comprises means for applying said resin in said center section of said facing surface while said transparent cover surface facing to said panel surface is directed upward, and said apparatus has means for turning said transparent cover upside down for making a condition where said applied resin is hung down so that a more central part thereof is positioned at a lower part.

17. The apparatus for manufacturing a liquid crystal component according to claim 16, wherein a waiting time is given for said resin to hang down from a time when said transparent cover is turned upside down to a time when said gap is reduced.

18. The apparatus for manufacturing a liquid crystal component according to claim 15, having means for pressurizing said transparent cover toward said panel surface of said liquid crystal module and for controlling the pressurization when said gap is reduced.

19. The apparatus for manufacturing a liquid crystal component according to claim 15, having means for adjusting a parallelism of said transparent cover relative to said panel surface of said liquid crystal module.

20. The apparatus for manufacturing a liquid crystal component according to claim 15, having means for aligning between said panel surface and said transparent cover.

21. The apparatus for manufacturing a liquid crystal component according to claim 15, having a dispenser for applying said resin to form said dam.

22. The apparatus for manufacturing a liquid crystal component according to claim 15, having a stamper for applying said resin to form said dam.

23. The apparatus for manufacturing a liquid crystal component according to claim 15, wherein said dam is formed in a whole circumference of said peripheral section of said one surface.

24. The apparatus for manufacturing a liquid crystal component according to claim 15, wherein said dam is formed intermittently in said peripheral section of said one surface.

25. The apparatus for manufacturing a liquid crystal component according to claim 15, wherein an ultraviolet cure resin is used as said transparent resin, and said apparatus has an ultraviolet irradiating means for semi-curing and curing said ultraviolet cure resin.
